# EUROPÄISCHE PATENTSCHRIFT

(11) **EP 3 770 989 B1**
(45) Veröffentlichungstag und Bekanntmachung des Hinweises auf die Patenterteilung: **10.09.2025**
(21) Anmeldenummer: 20185588.9
(22) Anmeldetag: 14.07.2020
(51) Int. Cl.: H01M 50/183, H01M 50/20

(54) **BATTERIEGEHÄUSE FÜR EINE FAHRZEUGBATTERIE**
BATTERY HOUSING FOR A VEHICLE BATTERY
BOITIER DE BATTERIE POUR BATTERIE DE VÉHICULE

(30) Priorität: 22.07.2019 DE 102019210790
(43) Veröffentlichungstag der Anmeldung: 27.01.2021
(73) Patentinhaber: VOLKSWAGEN AG, 38440 Wolfsburg (DE)
(72) Erfinder: Dupper, Denis, 38518 Gifhorn (DE)

(56) Entgegenhaltungen:
- DE-A1- 102012 218 188
- DE-A1- 102016 107 369
- JP-A- 2015 230 891
- US-A1- 2014 246 259
- US-A1- 2015 207 119

## Beschreibung

Die Erfindung betrifft ein Batteriegehäuse für eine Fahrzeugbatterie, aufweisend ein Gehäuseteil mit einem umfangsseitigen Dichtungsflansch, und einen Gehäusedeckel, welcher eine umfangsseitig umlaufende Dichtung aufweist, welche einen zwischen dem Dichtungsflansch und dem Gehäusedeckel gebildeten Kontaktrand abdichtet. Die Erfindung betrifft weiterhin ein Verfahren zur Herstellung eines solchen Batteriegehäuses, und eine Fahrzeugbatterie mit einem solchen Batteriegehäuse.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriemodul auf, bei welchem mehrere einzelne Batteriezellen modular verschaltet sind.

Die Batteriezellen oder Batteriemodule sind hierbei typischerweise in einem Batteriegehäuse der Fahrzeugbatterie aufgenommen. Derartige Batteriegehäuse weisen in der Regel ein Gehäuseteil mit einem umfangsseitigen Dichtungsflansch auf, welches mit einem Gehäusedeckel verschließbar ist. Zwischen dem Gehäusedeckel und dem Dichtungsflansch ist üblicherweise eine umfangsseitig umlaufende Dichtung vorgesehen, welche einerseits das Gehäuseinnere, also die Batteriezellen oder die Batteriemodule, gegen ein Eindringen von Feuchtigkeit und/oder Schmutz schützen, sowie andererseits ein Austreten von Chemikalien im Falle einer Beschädigung einer oder mehrerer Batteriezellen verhindern soll. Der notwendige Dichtdruck wird hierbei in der Regel durch ein Verschrauben oder ein Vernieten von dem Gehäusedeckel und dem Dichtungsflansch realisiert.

Die Dichtung des Batteriegehäuses hat grundsätzlich die Funktion, die Dichtigkeit des Batteriegehäuses über die Lebensdauer der Fahrzeugbatterie oder des Kraftfahrzeugs sicherzustellen. Zu diesem Zwecke werden Batteriegehäuse üblicherweise nach der Montage mit Über- und Unterdruck auf ihre Dichtigkeit geprüft und untersucht.

Als Dichtungen sind beispielsweise Formdichtungen aus Kunststoff- oder Gummimaterialien, beispielsweise aus EPDM (Ethylen-Propylen-Dien-Kautschuk), NBR (Acrylnitril- oder Nitril-Butadien-Kautschuk), oder Silikon-Schaum möglich. Derartige Formdichtungen sind typischerweise als einteilige, also einstückige oder monolithische, Formteile hergestellt, welche als Einlegdichtung zwischen den Gehäusedeckel und den Dichtungsflansch angeordnet werden. Bei größeren Batteriegehäusen sind hierbei entsprechend größer dimensionierte Formdichtungen notwendig, wodurch deren Handhabung im Zuge der Montage erschwert wird. Dies bedingt in der Folge auch eine nachteilig erhöhte Fehleranfälligkeit bei der Montage.

Ebenso möglich ist beispielsweise eine Dichtung in Form einer aus einem Elastomer, insbesondere aus einem Silikonkautschuk, gefertigten Dichtschnur oder Dichtleiste. Derartige Dichtschnüre benötigen jedoch einen vergleichsweise großflächigen Dichtungsflansch als Anlage, wodurch der vorhandene Bauraum für die Batteriezellen innerhalb des Batteriegehäuses nachteilig eingeschränkt wird. Mit anderen Worten wird durch den Einsatz einer Dichtschnur die Energiekapazität des Batteriemoduls beziehungsweise der Batteriezellen nachteilig reduziert. Des Weiteren ist auch die Handhabung von Dichtschnüren bei größeren Batteriegehäusen erschwert, so dass bei der Montage eine erhöhte Fehleranfälligkeit gegeben ist.

Weiterhin sind beispielsweise auch stoffschlüssige Klebenahten, beispielsweise aus einem PU-Kleber (Polyurethan), als Gehäusedichtung denkbar. Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Derartige Klebenahten erfordern im Zuge der Montage vergleichsweise lange Aushärtezeiten, wodurch die Produktionsdauer derartiger Fahrzeugbatterien nachteilig verlängert wird. Des

Weiteren sind derartige Klebenahten im Zuge der Auftragung oder Applizierung auf den Gehäusedeckel und/oder den Dichtungsflansch anfällig bei schwankenden Prozessparametern wie Raumtemperatur, Luftfeuchtigkeit oder Oberflächenqualität der Auftragungsflächen. Daher ist es notwendig, derartige Prozessparameter im Zuge der Auftragung zu steuern und/oder zu regeln, wodurch die Herstellungskosten des Batteriegehäuses nachteilig erhöht werden. Derartige Klebenahten weisen weiterhin den Nachteil auf, dass bei einer Wartung oder einer Reparatur der Fahrzeugbatterie die Klebenaht nicht zerstörungsfrei lösbar ist.

Im Montagezustand sind der Gehäusedeckel und das Gehäuseteil aneinander befestigt. Üblicherweise ist die Dichtung hierbei im Bereich eines radial innenseitigen Kontaktrands zwischen dem Dichtungsflansch und dem Gehäusedeckel angeordnet, wobei der Gehäusedeckel und das Gehäuseteil radial außenseitig von der Dichtung aufeinander liegen. Dieser Fügespalt oder diese Fügezone zwischen den aufeinanderliegenden Gehäusehälften ist auch als Nullspaltbereich bezeichnet.

Unter "Nullspaltbereich" ist hier und im Folgenden insbesondere der technische Nullspalt zwischen den Gehäusehälften, also der verbleibende Spalt zwischen den beiden zu fügenden Gehäusehälften, zu verstehen, welcher beispielsweise als ein Spalt mit der Breite null bezeichnet wird, obwohl aufgrund von Fertigungstoleranzen oder Oberflächenunebenheiten beziehungsweise Oberflächenrauigkeiten zum Beispiel ein Restspalt mit einer Breite im Bereich von mehreren Mikrometern zwischen den Gehäusehälften vorliegen kann. Mit anderen Worten ist der Nullspaltbereich derjenige Bereich zwischen den Gehäusehälften, in dem die Bauteile konstruktionsseitig blank oder plan, also unmittelbar und spaltfrei, aufeinander liegen würden, wenn es keine fertigungsseitige Oberflächenunebenheiten oder Oberflächenrauigkeiten der Anlageflächen der Bauteile geben würde.

Nachteiligerweise kann im Betrieb der Fahrzeugbatterie ein Elektrolyt, wie beispielsweise Wasser, in diesen Nullspaltbereich eindringen. Bei Dichtungen der vorstehend beschriebenen Art tritt somit die Gefahr einer sogenannten korrosiven Unterwanderung auf, bei welcher der Elektrolyt ausgehend vom Nullspaltbereich die Oberfläche des Dichtungsflansches und/oder des Gehäusedeckels angreift und die Dichtung unterwandert, wodurch die Dichtung das Batteriegehäuse nicht länger funktionsgemäß abdichten kann, und somit ungewünschte Leckagen auftreten.

Zur Vermeidung einer solchen korrosiven Unterwanderung ist es beispielsweise denkbar, die Dichtung als eine dauerplastische Dichtung auszuführen. Unter einer dauerplastischen Dichtung ist hierbei insbesondere eine Dichtmasse zu verstehen, welche dauerhaft eine kittartige, plastische Konsistenz aufweist. Mit anderen Worten erfolgt bei einer solchen dauerplastischen Dichtmasse keine Aushärtung.

Derartige dauerplastische Dichtungen, welche nachfolgend auch als Flüssigdichtungen bezeichnet werden, benötigen jedoch nachteiligerweise sehr genau bearbeitete Dichtungsflächen, also eine hohe Oberflächenqualität des Gehäusedeckels und des Dichtungsflansches mit geringen Schwankungen der Fertigungstoleranz. Derartige Dichtungsflächen liegen bei Fahrzeugbatterien in der Regel nicht vor, da beispielsweise die Gehäusedeckel herkömmlicherweise als ein tiefgezogenes Bauteil ausgeführt sind. Dies bedingt zusätzliche Bearbeitungsschritte, wie beispielsweise ein Überfräsen und/oder Polieren der Anlageflächen des Gehäusedeckels, wodurch die Herstellung einer solchen Fahrzeugbatterie wesentlich aufwendiger und kostenintensiver werden würde.

In der US 2014/246259 A1 ist eine Fahrzeugbatterie mit einem Batteriegehäuse beschrieben. Das Batteriegehäuse weist zwei aus einer Aluminiumlegierung druckgegossene Gehäuseteile mit einer Vielzahl von Kühlrippen auf. Diese Kühlrippen verbessern die Wärmeabgabeeigenschaften und dienen auch als Schutz für die Ecken eines unteren Teils der Fahrzeugbatterie im Falle eines Aufpralls auf eine Bordsteinkante oder dergleichen. Die Kühlrippen sind an beiden Seiten eines Sicherheitsventils vorgesehen, um das Sicherheitsventil vor Stößen zu schützen.

Die DE 10 2016 107369 A1 offenbart eine Hochvoltbatterie mit einem Batteriegehäuse, das einen Aufnahmeraum für Batteriezellen umfasst, der durch einen Deckel mit Hilfe einer Klebeverbindung mit einer aus einem Kleber gebildeten Dichtung dicht verschließbar ist. Ein Schneidfaden, der parallel zu der Dichtung verlegt wird dient dazu, die Klebeverbindung bedarfsweise zu lösen.

Die US 2015/207119 A1 beschreibt ein Batteriegehäuse mit einem unteren Rahmen und einer obere Abdeckung. Ein Batteriemodul ist in dem unteren Rahmen des Batteriegehäuses angeordnet. Die obere Abdeckung ist mit dem unteren Rahmen über ein Dichtungselement fest verbunden, das sich durchgehend über den gesamten Umfang des jeweiligen äußeren Umfangsrandabschnitts der oberen Abdeckung erstreckt.

Die DE 10 2012 218188 A1 offenbart ein Gehäuse für eine Batteriezelle. Das Gehäuse besteht aus einem Behälter und einer Deckelanordnung, wobei die Deckelanordnung unter anderem eine Deckplatte umfasst, welche mit dem Behälter nach dem Einbringen von innen liegenden Komponenten der Batteriezelle fest verbunden wird. Die Deckplatte wird beispielsweise entlang einer Auskragung mithilfe einer Schicht aus Klebstoff mit einer Innenoberfläche des Behälters verklebt. Eine beispielsweise von einem O-Ring gebildete Dichtwulst einer Dichtanordnung verhindert, dass in das Gehäuse eingeführter Elektrolyt in Kontakt mit dem Klebstoff gelangt und diesen chemisch angreift.

Der Erfindung liegt die Aufgabe zugrunde, ein besonders geeignetes Batteriegehäuse für eine Fahrzeugbatterie anzugeben. Insbesondere soll die Gefahr einer korrosiven Unterwanderung der (Gehäuse-)Dichtung vollständig vermieden oder zumindest wesentlich reduziert werden. Der Erfindung liegt weiterhin die Aufgabe zugrunde, ein besonders geeignetes Verfahren zur Herstellung eines solchen Batteriegehäuses, und eine besonders geeignete Fahrzeugbatterie, sowie eine besonders geeignete Verwendung einer Flüssigdichtung zum Korrosionsschutz anzugeben.

Die Aufgabe wird hinsichtlich des Batteriegehäuses mit den Merkmalen des Anspruchs 1 und hinsichtlich des Verfahrens mit den Merkmalen des Anspruchs 7 sowie hinsichtlich der Fahrzeugbatterie mit den Merkmalen des Anspruchs 9 erfindungsgemäß gelöst. Vorteilhafte Ausgestaltungen und Weiterbildungen sind Gegenstand der jeweiligen Unteransprüche. Die im Hinblick auf das Batteriegehäuse angeführten Vorteile und Ausgestaltungen sind sinngemäß auch auf das Verfahren und/oder die Fahrzeugbatterie und/oder die Verwendung übertragbar und umgekehrt.

Das erfindungsgemäße Batteriegehäuse ist für eine Fahrzeugbatterie geeignet und eingerichtet. Das Batteriegehäuse weist hierbei zwei Gehäusehälften auf, welche zu einem geschlossenen Gehäuse gefügt sind. Die erste Gehäusehälfte ist als ein Gehäuseteil (Unterschale) ausgeführt, und weist beispielsweise eine Anzahl von Batteriefächern oder Aufnahmen für Batteriezellen auf. Das Gehäuseteil weist einen umfangsseitigen Dichtungsflansch auf. Als Dichtungsflansch ist hier und im Folgenden insbesondere eine stirnseitige oder axiale Anlagefläche der Seitenwände des Gehäuseteils zu verstehen, auf welcher das zweite Gehäuseteil zumindest teilweise aufliegt. Die zweite Gehäusehälfte ist hierbei als ein Gehäusedeckel (Batteriedeckel, Oberschale) ausgebildet. Der Gehäusedeckel weist eine umfangsseitig umlaufende Dichtung auf, welche einen zwischen dem Dichtungsflansch und dem Gehäusedeckel gebildeten Kontaktrand vorzugsweise leckagefrei und fluiddicht abdichtet.

Radial außenseitig zur Dichtung, also vom Kontaktrand zum Äußeren des Batteriegehäuses hin, ist ein Nullspaltbereich, dies bedeutet ein Bereich eines technischen Nullspalts, zwischen dem Gehäusedeckel und dem Dichtungsflansch gebildet. Erfindungsgemäß ist eine Flüssigdichtung in den Nullspaltbereich eingebracht. Dies bedeutet, dass zusätzlich zu der radial innenseitigen Dichtung eine zweite, hierzu radial außenseitig angeordnete Dichtung in Form einer Flüssigdichtung vorgesehen ist. Die Flüssigdichtung verhindert hierbei ein Eindringen von Elektrolyten beziehungsweise von Wasser in den Nullspaltbereich, wodurch der radial außenseitige Bereich vor der Dichtung nicht korrosiv angreifbar ist.

Die Dichtung und die Flüssigdichtung wirken als eine Batteriedeckeldichtung mit Korrosionsschutzfunktion zusammen, welche insbesondere auch für größer dimensionierte Batteriegehäuse eine zuverlässige und betriebssichere Gehäuseabdichtung realisiert. Dadurch ist ein besonders geeignetes, fluiddichtes und leckagefreies Batteriegehäuse ermöglicht, bei welchem die Gefahr einer korrosiven Unterwanderung der Dichtung vorteilhaft reduziert oder vollständig vermieden ist.

Der erfindungsgemäße kombinierten Einsatz der Dichtung und der Flüssigdichtung ist ein besonders geeignetes Batteriegehäuse realisiert. Die Flüssigdichtung verhindert in einfacher und aufwandsreduzierter Weise ein Eindringen von Elektrolyten in den Nullspaltbereich, so dass die Dichtungswirkung der Dichtung im Wesentlichen über die komplette Lebensdauer der Fahrzeugbatterie gewährleistet ist. Die Flüssigdichtung dient somit im Wesentlichen lediglich einem Korrosionsschutz des Nullspaltbereichs und nicht einer Gehäuseabdichtung des Batteriegehäuses. Dies ermöglicht eine Reduzierung von Fertigungstoleranzen der Gehäusehälften, da für die Abdichtung im Wesentlichen lediglich die innenseitige Dichtung genutzt wird. Insbesondere sind somit keine zusätzlichen und aufwendigen Bearbeitungsschritte der Anlageflächen notwendig.

Die Dichtung ist hierbei insbesondere fluid- und chemikalienbeständig, so dass eine zuverlässige Abdichtung gegenüber eintretenden Flüssigkeiten und gegenüber austretenden (Batterie-)Chemikalien realisiert ist. Die Flüssigdichtung ist hierbei insbesondere elektrolyt- oder wasserbeständig, und wirkt im Wesentlichen als ein Korrosionsschutz der aneinander anliegenden Gehäuseflächen im Nullspaltbereich. Mit anderen Worten ist die Flüssigdichtung insbesondere auf den Medienkontakt mit einem Elektrolyten beziehungsweise mit Wasser ausgebildet. Beispielsweise ist die Flüssigdichtung als ein synthetisches, dauerplastisches Dichtungsmittel, wie beispielsweise Drei Bond 1108, ausgeführt.

In einer vorteilhaften Ausführung füllt die Flüssigdichtung den Nullspaltbereich im Wesentlichen vollständig aus. Dadurch ist sichergestellt, dass kein Elektrolyt in den Nullspaltbereich eindringen kann, wodurch die Gefahr einer korrosiven Unterwanderung der Dichtung im Wesentlichen vollständig vermieden ist.

Die Dichtung ist beispielsweise als eine Form- oder Schnurdichtung ausführbar. In einer zweckmäßigen Ausgestaltung ist die Dichtung jedoch als eine Schaumdichtung, also als eine Formdichtung oder Dichtnaht in Form eines geschäumten Kunststoffmaterials, ausgeführt. Die Dichtung ist hierbei beispielsweise aus einem Polyurethan- oder Silikonschaum hergestellt. Dadurch ist eine einfach und kostengünstig herstellbare Dichtung realisiert.

In einer denkbaren Weiterbildung ist der Gehäusedeckel an einer Anzahl von Befestigungsstellen kraftschlüssig mit dem Dichtungsflansch gefügt. Dadurch ist eine einfache und aufwandsreduzierte Befestigung des Gehäusedeckels am Gehäuseteil realisiert, wodurch ein zuverlässiger und betriebssicherer Dichtungsdruck für die Dichtung des Kontaktrands gewährleistet ist.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinander drückt, beispielsweise eine Schraubenkraft oder die Gewichtskraft selbst), kann die kraftschlüssige Verbindung nicht aufrecht erhalten und somit gelöst werden.

Durch die Befestigungsstellen werden der Gehäusedeckel und der Dichtungsflansch aufeinander gepresst oder unmittelbar gegeneinander verspannt. Die kraftschlüssige Verbindung ist hierbei vorzugsweise als eine Schraubverbindung ausgeführt. Hierbei weist der Gehäusedeckel beispielsweise eine Anzahl von Aussparungen auf, welche mit Gewindebohrungen des Dichtungsflansches axial fluchtend übereinander angeordnet sind, wobei durch die Aussparungen jeweils eine Befestigungsschraube geführt und in die jeweilige Gewindebohrung eingedreht oder eingeschraubt ist.

Das erfindungsgemäße Verfahren ist zur Herstellung eines vorstehend beschriebenen Batteriegehäuses geeignet und ausgestaltet. Verfahrensgemäß wird hierbei zusätzlich zur Dichtung am Kontaktrand auch eine Flüssigdichtung im Nullspaltbereich auf den Gehäusedeckel und/oder den Dichtungsflansch aufgebracht, bevor der Gehäusedeckel mit dem Dichtungsflansch gefügt wird. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

In einer denkbaren Ausführungsform wird beispielsweise ein sprühbares Dichtmittel als Flüssigdichtung verwendet, welches vorzugsweise flächig als Sprühnebel auf den Gehäusedeckel und/oder den Dichtungsflansch aufgetragen wird. Unter einem sprühbaren Dichtmittel ist hierbei insbesondere ein zerstäubbares oder als ein Aerosol verteilbares Dichtmittel zu verstehen.

In einer bevorzugten Ausgestaltung des Verfahrens wird die Flüssigdichtung als ein pastöses, insbesondere dauerplastisches, Dichtmittel aufgebracht. Eine derartige pastöse Flüssigdichtung ermöglicht eine automatisierte und zeitreduzierte sowie - hinsichtlich Menge und Position - sehr präzise Auftragung oder Applizierung der Flüssigdichtung. Des Weiteren treten somit keine Verschmutzungen oder Kontaminationen durch einen Sprühnebel in der Produktion des Batteriegehäuses auf, so dass keine zusätzliche Einkapselung einer Auftragungs- oder Applikationsanlage notwendig ist.

Die Flüssigdichtung kann beispielsweise geradlinig auf den Gehäusedeckel und/oder den Dichtungsflansch aufgebracht werden. In einer geeigneten Weiterbildung wird die Flüssigdichtung jedoch insbesondere raupenförmig oder mäanderförmig auf den Gehäusedeckel und/oder den Dichtungsflansch aufgebracht. Dadurch ist eine besonders gleichmäßige Verteilung der Flüssigdichtung im Nullspaltbereich gewährleistet.

In einer bevorzugten Ausbildung des Verfahrens wird der Gehäusedeckel nach einem Auftragen der Flüssigdichtung an den Dichtungsflansch gefügt. Dies bedeutet, dass die Flüssigdichtung nach einem FIP-Verfahren (formed in place) realisiert wird, bei welchem die Flüssigdichtung flüssig aufgetragen, und die Gehäusehälften anschließend miteinander gefügt werden. Die Verteilung der Flüssigdichtung im Nullspaltbereich erfolgt also vorzugsweise während und/oder nach dem Fügen der Gehäusehälften. Durch das Fügen oder Aufeinanderpressen der Gehäusehälften wird die flüssige Flüssigkeitsdichtung im Wesentlichen vollflächig im Nullspaltbereich verteilt. Dies bedeutet, dass die Anlageflächen des Gehäusedeckels und des Dichtungsflansches im Wesentlichen vollständig von der Flüssigdichtung benetzt werden, selbst wenn die Flüssigdichtung lediglich auf einer der Gehäusehälften aufgebracht wird. Dadurch ist ein besonders zuverlässiger Korrosionsschutz zur Vermeidung von korrosiven Unterwanderungen der Dichtung realisierbar.

Dadurch wird sichergestellt, dass die Flüssigdichtung stets eine optimale Passung im Nullspaltbereich aufweist, da sie sich durch den Anpressdruck bei der Montage selbst formt. So entsteht nach dem Abbinden oder Aushärten eine insbesondere elektrolytundurchlässige und vor Korrosion geschützte Verbindung zwischen dem Gehäusedeckel und dem Dichtungsflansch.

In einer bevorzugten Anwendung ist das Batteriegehäuse Teil einer Fahrzeugbatterie eines elektrisch angetriebenen oder antreibbaren Kraftfahrzeugs, insbesondere eines Elektro- oder Hybridfahrzeugs. Dadurch ist eine besonders geeignete und betriebssichere sowie langlebige Fahrzeugbatterie realisiert.

Ein nicht erfindungsgemäßer Aspekt der Erfindung sieht die Verwendung einer Flüssigdichtung als Korrosionsschutz eines Nullspaltbereichs zwischen einem Gehäusedeckel und einem Dichtungsflansch eines Gehäuseteils eines Batteriegehäuses vor. Der Nullspaltbereich ist radial außenseitig zu einer Dichtung des Batteriegehäuses angeordnet, so dass durch den Korrosionsschutz der Flüssigdichtung ein korrosives Unterwandern der Dichtung verhindert wird.

Nachfolgend sind Ausführungsbeispiele der Erfindung anhand einer Zeichnung näher erläutert. Darin zeigen:
- Fig. 1: in perspektivischer Darstellung eine Fahrzeugbatterie mit einem Batteriegehäuse,
- Fig. 2: in perspektivischer Darstellung ausschnittsweise das Batteriegehäuse,
- Fig. 3: in Schnittdarstellung das Batteriegehäuse entlang der Schnittlinie III-III gemäß Fig. 2,
- Fig. 4: in Schnittdarstellung das Batteriegehäuse entlang der Schnittlinie IV-IV gemäß Fig. 2,
- Fig. 5: in Draufsicht ausschnittsweise ein Gehäuseteil des Batteriegehäuses mit einem Dichtungsflansch und einer darauf raupenförmig aufgebrachten Flüssigdichtung,
- Fig. 6: in Draufsicht ausschnittsweise den Dichtungsflansch mit einer pastös aufgebrachten Flüssigdichtung, und
- Fig. 7: in Draufsicht ausschnittsweise den Dichtungsflansch mit einer sprühbar aufgebrachten Flüssigdichtung.

Einander entsprechende Teile und Größen sind in allen Figuren stets mit den gleichen Bezugszeichen versehen.

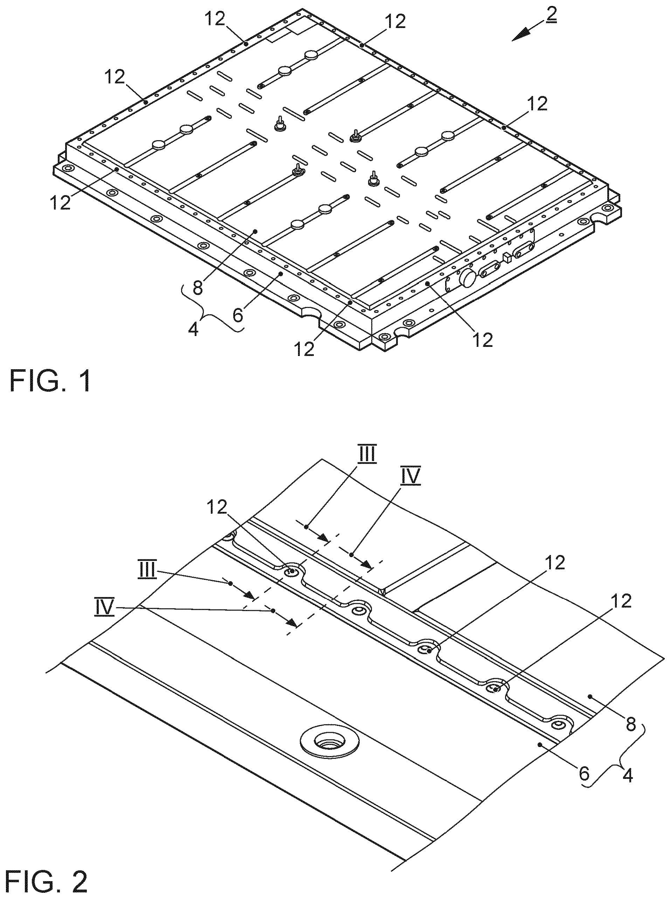

Die Fig. 1 zeigt in perspektivischer Darstellung eine Fahrzeugbatterie 2 für ein nicht näher gezeigtes elektrisch angetriebenes oder antreibbares Kraftfahrzeug. Im Einbauzustand ist die Fahrzeugbatterie 2 in einem Batteriebauraum des Kraftfahrzeugs angeordnet. Der Batteriebauraum ist beispielsweise untergrundseitig geöffnet und von einem Fahrzeug-Unterboden begrenzt. Mit anderen Worten ist die Fahrzeugbatterie insbesondere von der Fahrzeugunterseite her montierbar oder einbaubar.

Die Fahrzeugbatterie 2 weist ein Batteriegehäuse 4 auf. In dem Batteriegehäuse 4 sind eine Anzahl von nicht näher gezeigten Batteriemodulen oder Batteriezellen als elektrochemische Energiespeicher angeordnet und verschaltet. Das Batteriegehäuse 4 weist ein Gehäuseteil 6 und ein dieses verschließenden oder abdeckenden Gehäusedeckel 8 auf. Der Gehäusedeckel 8 ist beispielsweise ein tiefgezogenes Blechteil.

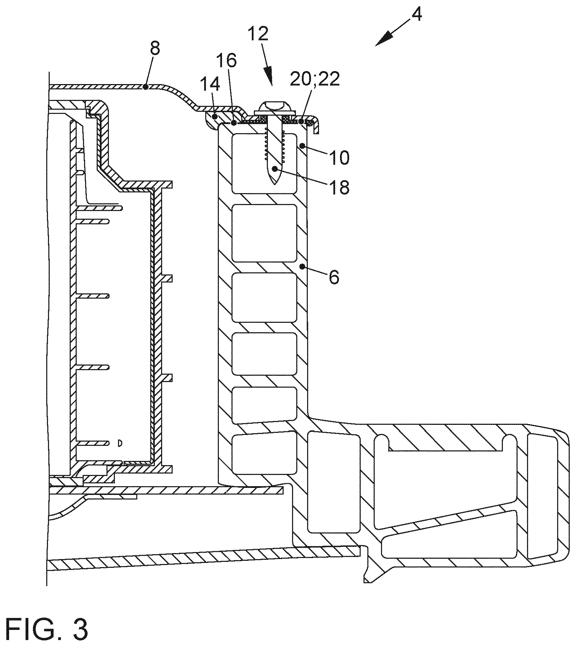

Das etwa rechteckförmige Gehäuseteil 6 weist vier axial emporstehende Seitenwände auf, welche das Innere des Batteriegehäuses 4 einfassen. Der Gehäusedeckel 8 liegt hierbei im Wesentlichen stirnseitig auf diesen Seitenwänden auf, wobei die dem Gehäusedeckel 8 zugewandten Auflageflächen der Seitenwände im Folgenden auch als Dichtungsflansche 10 (Fig. 3) des Gehäuseteils 6 bezeichnet werden.

Wie in der vergrößerten Darstellung der Fig. 2 ausschnittsweise ersichtlich ist, ist der Gehäusedeckel 8 an mehreren umfangsseitig verteilten Befestigungsstellen 12 kraftschlüssig an den Dichtungsflansch 10 beziehungsweise das Gehäuseteil 6 gefügt. Die Befestigungsstellen 12 sind hierbei insbesondere als Schraubverbindungen ausgeführt, und in den Figuren lediglich beispielhaft mit Bezugszeichen versehen.

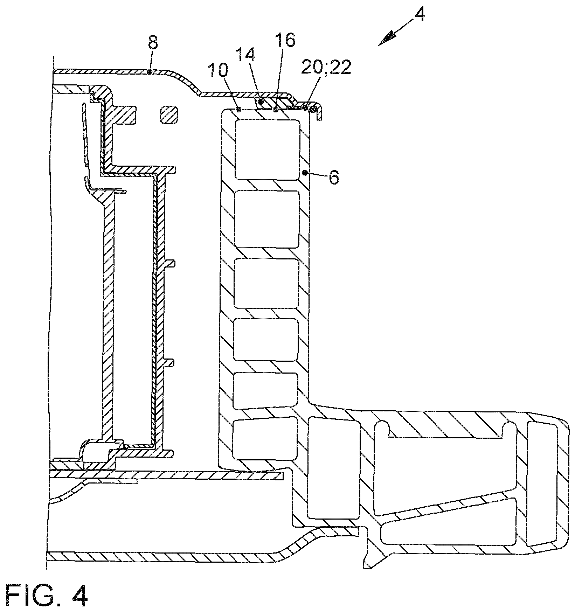

Die Figuren 3 und 4 zeigen in Schnittdarstellung das Batteriegehäuses 4 entlang der Schnittlinie III-III oder IV-IV gemäß Fig. 2. Die Schnittlinie III-III verläuft hierbei durch die Befestigungsstelle 12, wobei die Schnittlinie IV-IV zwischen zwei Befestigungsstellen 12 angeordnet ist.

Wie in den schematischen und vereinfachten Darstellungen der Fig. 3 und der Fig. 4 vergleichsweise deutlich ersichtlich ist, weist der Gehäusedeckel 6 eine umfangsseitig umlaufende Dichtung 14 auf, welche einen zwischen dem Dichtungsflansch 10 und dem Gehäusedeckel 6 gebildeten Kontaktrand 16 leckagefrei und fluiddicht abdichtet. Die Dichtung 14 ist beispielsweise als eine Schaumdichtung, insbesondere als eine Formdichtung oder Dichtnaht in Form eines geschäumten Kunststoffmaterials, ausgeführt. Die Dichtung 14 ist hierbei beispielsweise aus einem Polyurethan- oder Silikonschaum hergestellt und insbesondere in einem Spritzgussverfahren an den Gehäusedeckel 8 angespritzt.

Die randseitig umlaufende Dichtung 14 wird durch die Befestigungsstellen 12 mit einem axialen Dichtungsdruck beaufschlagt und zumindest teilweise komprimiert. Die Befestigungsstellen 12 weisen hierbei jeweils eine Befestigungsschraube 18 auf, welche den Gehäusedeckel 6 durchgreift und in den Dichtungsflansch 10 beziehungsweise das Gehäuseteil 6 eingedreht sind.

Radial außenseitig zur Dichtung 14 beziehungsweise zum Kontaktrand 16, also zum Äußeren des Batteriegehäuses 4 hin, ist ein Nullspaltbereich 20 zwischen dem Gehäusedeckel 6 und dem Dichtungsflansch 10 gebildet. Wie in den Figuren schematisch gezeigt ist, ist in den Nullspaltbereich 20 eine Flüssigdichtung 22 eingebracht, welche diesen im Wesentlichen vollständig ausfüllt. Die Flüssigdichtung 22 verhindert ein Eindringen von Elektrolyten bzw. Wasser in den Nullspaltbereich 20, wodurch der radial außenseitige Bereich vor der Dichtung 14 nicht korrosiv von dem Elektrolyten angreifbar ist. Die Dichtung 14 und die Flüssigdichtung 22 wirken als eine Batteriedeckeldichtung mit Korrosionsschutzfunktion zusammen.

Die Dichtung 14 ist hierbei aus einem fluid- und chemikalienbeständigen Material hergestellt, wobei die Flüssigdichtung 22 aus einem insbesondere elektrolytbeständigen, insbesondere wasserbeständigen, Material hergestellt ist.

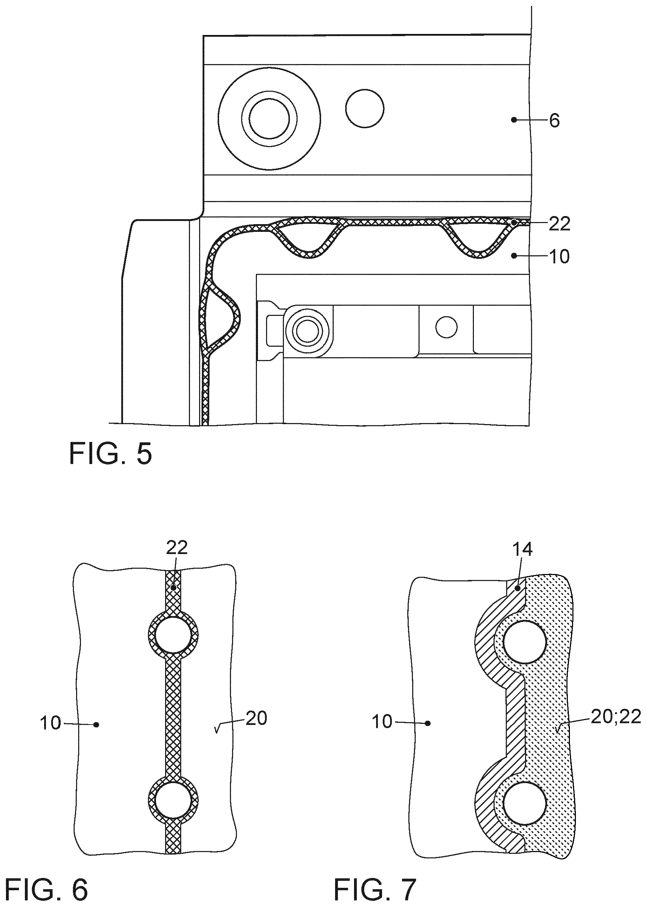

Nachfolgend ist anhand der Figuren 5 bis 7 ein Verfahren zur Herstellung des Batteriegehäuses 4 näher erläutert.

Verfahrensgemäß wird hierbei die Flüssigdichtung 22 im Nullspaltbereich 20 radial außenseitig zur Dichtung 14 auf den Dichtungsflansch 10 aufgebracht oder appliziert, bevor der Gehäusedeckel 8 mit dem Dichtungsflansch 10 gefügt wird (Fig. 5). Zusätzlich oder alternativ ist es beispielsweise ebenso denkbar, dass die Flüssigdichtung 22 auf den Gehäusedeckel 8 aufgebracht wird.

Der Gehäusedeckel 6 wird nach einem Auftragen oder Applizieren der Flüssigdichtung 22 an den Dichtungsflansch 10 schraubbefestigt. Dies bedeutet, dass die Flüssigdichtung 22 im Wesentlichen nach einem FIP-Verfahren (formed in place) realisiert wird. Dadurch wird sichergestellt, dass die Flüssigdichtung 22 stets eine optimale Passung im Nullspaltbereich 20 aufweist, da sie sich durch den Anpressdruck bei der Montage selbst formt. Die Flüssigdichtung 22 wird hierbei geeigneterweise raupenförmig oder mäanderförmig auf den Dichtungsflansch 10 aufgebracht, so dass eine möglichst gleichmäßige Benetzung und Ausfüllung des Nullspaltbereichs 20 beim Anpressen bzw. Schraubbefestigen des Gehäusedeckels 6 am Dichtungsflansch 10 realisiert wird. So entsteht eine elektrolytundurchlässige und vor Korrosion geschützte Verbindung zwischen dem Gehäusedeckel 8 und dem Dichtungsflansch 10 im Nullspaltbereich 22.

In der Fig. 6 ist die Flüssigdichtung 22 als ein pastöses Dichtmittel aufgebracht. Eine derartige pastöse Flüssigdichtung 22 ermöglicht eine automatisierte und zeitreduzierte sowie - hinsichtlich Menge und Position - sehr präzise Auftragung oder Applizierung.

Das in der Fig. 7 dargestellte Ausführungsbeispiel zeigt eine Flüssigdichtung 22 in Form eines sprühbar aufgebrachten Dichtmittels, welches flächig als Sprühnebel auf den Dichtungsflansch 10 im Nullspaltbereich 20 aufgetragen wird.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche kombinierbar, ohne den Gegenstand der beanspruchten Erfindung zu verlassen.

### Bezugszeichenliste

- 2: Fahrzeugbatterie
- 4: Batteriegehäuse
- 6: Gehäuseteil
- 8: Gehäusedeckel
- 10: Dichtungsflansch
- 12: Befestigungsstelle
- 14: Dichtung
- 16: Kontaktrand
- 18: Befestigungsschraube
- 20: Nullspaltbereich
- 22: Flüssigdichtung

## Patentansprüche

1. Batteriegehäuse (4) für eine Fahrzeugbatterie (2), aufweisend ein Gehäuseteil (6) mit einem umfangsseitigen Dichtungsflansch (10), und einen Gehäusedeckel (8), welcher eine umfangsseitig umlaufende Dichtung (14) aufweist, welche einen zwischen dem Dichtungsflansch (10) und dem Gehäusedeckel (6) gebildeten Kontaktrand (16) abdichtet,
- wobei radial außenseitig zur Dichtung (14) ein Nullspaltbereich (20) zwischen dem Gehäusedeckel (6) und dem Dichtungsflansch (10) gebildet ist, und
- wobei in den Nullspaltbereich (20) eine Flüssigdichtung (22) eingebracht ist.

2. Batteriegehäuse (4) nach Anspruch 1,
**dadurch gekennzeichnet,**
**dass** die Flüssigdichtung (22) den Nullspaltbereich (20) im Wesentlichen vollständig ausfüllt.

3. Batteriegehäuse (4) nach Anspruch 1 oder 2,
**dadurch gekennzeichnet,**
**dass** die Dichtung (14) eine Schaumdichtung ist.

4. Batteriegehäuse (4) nach einem der Ansprüche 1 bis 3,
**dadurch gekennzeichnet,**
**dass** der Gehäusedeckel (8) an einer Anzahl von Befestigungsstellen (12) kraftschlüssig mit dem Dichtungsflansch (10) gefügt ist.

5. Verfahren zur Herstellung eines Batteriegehäuses (4) nach einem der Ansprüche 1 bis 4, bei welchem eine Flüssigkeitsdichtung (22) im Nullspaltbereich (20) auf den Gehäusedeckel (8) und/oder den Dichtungsflansch (10) aufgebracht wird, bevor der Gehäusedeckel (8) mit dem Dichtungsflansch (10) gefügt wird.

6. Verfahren nach Anspruch 5,
**dadurch gekennzeichnet,**
**dass** als Flüssigdichtung (22) ein pastöses Dichtmittel aufgebracht wird.

7. Verfahren nach Anspruch 5 oder 6,
**dadurch gekennzeichnet,**
**dass** die Flüssigdichtung (22) raupenförmig oder mäanderförmig auf den Gehäusedeckel (8) und/oder den Dichtungsflansch (10) aufgebracht wird.

8. Verfahren nach einem der Ansprüche 5 bis 7,
**dadurch gekennzeichnet,**
**dass** die Flüssigdichtung (22) während des Fügens des Gehäusedeckel (8) an den Dichtungsflansch (10) in dem Nullspaltbereich (20) verteilt wird.

9. Fahrzeugbatterie (2) eines elektrisch angetriebenen oder antreibbaren Kraftfahrzeugs, aufweisend ein Batteriegehäuse (4) nach einem der Ansprüche 1 bis 4.

## Claims

1. Battery housing (4) for a vehicle battery (2), comprising a housing part (6) which has a peripheral sealing flange (10), and a housing cover (8) which has a peripheral seal (14) which seals a contact edge (16) formed between the sealing flange (10) and the housing cover (6),
- wherein a zero-gap region (20) is formed radially on the outside of the seal (14), between the housing cover (6) and the sealing flange (10), and
- wherein a liquid seal (22) is introduced into the zero-gap region (20).

2. Battery housing (4) according to claim 1,
**characterized in that**
the liquid seal (22) substantially completely fills the zero-gap region (20).

3. Battery housing (4) according to claim 1 or claim 2,
**characterized in that**
the seal (14) is a foam seal.

4. Battery housing (4) according to any of claims 1 to 3,
**characterized in that**
the housing cover (8) is joined in a force-fitting manner to the sealing flange (10) at a number of fastening points (12).

5. Method for producing a battery housing (4) according to any of claims 1 to 4, wherein a liquid seal (22) is applied to the housing cover (8) and/or the sealing flange (10) in the zero-gap region (20) before the housing cover (8) is joined to the sealing flange (10).

6. Method according to claim 5,
**characterized in that**
a pasty sealant is applied as a liquid seal (22).

7. Method according to claim 5 or claim 6,
**characterized in that**
the liquid seal (22) is applied in a beaded or meandering manner to the housing cover (8) and/or the sealing flange (10).

8. Method according to any of claims 5 to 7,
**characterized in that**
the liquid seal (22) is distributed in the zero-gap region (20) during the joining of the housing cover (8) to the sealing flange (10).

9. Vehicle battery (2) of an electrically driven or drivable motor vehicle, comprising a battery housing (4) according to any of claims 1 to 4.

## Revendications

1. Boîtier de batterie (4) pour une batterie de véhicule (2), présentant une partie de boîtier (6) comportant une bride d'étanchéité (10) côté circonférentiel, et un couvercle de boîtier (8) qui présente un joint d'étanchéité (14) côté circonférentiel qui rend étanche un bord de contact (16) formé entre la bride d'étanchéité (10) et le couvercle de boîtier (6),
- dans lequel une zone formant jeu nul (20) est formée radialement à l'extérieur du joint d'étanchéité (14) entre le couvercle de boîtier (6) et la bride d'étanchéité (10), et
- dans lequel un joint à liquide (22) est introduit dans la zone formant jeu nul (20).

2. Boîtier de batterie (4) selon la revendication 1,
**caractérisé en ce**
**que** le joint à liquide (22) remplit sensiblement complètement la zone formant jeu nul (20).

3. Boîtier de batterie (4) selon la revendication 1 ou 2,
**caractérisé en ce**
**que** le joint d'étanchéité (14) est un joint en mousse.

4. Boîtier de batterie (4) selon l'une des revendications 1 à 3,
**caractérisé en ce**
**que** le couvercle de boîtier (8) est assemblé par adhérence avec la bride d'étanchéité (10) en un certain nombre de points de fixation (12).

5. Procédé de fabrication d'un boîtier de batterie (4) selon l'une des revendications 1 à 4, dans lequel un joint à liquide (22) est appliqué dans la zone formant jeu nul (20) sur le couvercle de boîtier (8) et/ou sur la bride d'étanchéité (10) avant que le couvercle de boîtier (8) ne soit assemblé avec la bride d'étanchéité (10).

6. Procédé selon la revendication 5,
**caractérisé en ce**
**qu'**un agent d'étanchéité pâteux est appliqué comme joint à liquide (22).

7. Procédé selon la revendication 5 ou 6,
**caractérisé en ce**
**que** le joint à liquide (22) est appliqué en forme de chenille ou de méandre sur le couvercle de boîtier (8) et/ou sur la bride d'étanchéité (10).

8. Procédé selon l'une des revendications 5 à 7,
**caractérisé en ce**
**que** le joint à liquide (22) est réparti dans la zone formant jeu nul (20) pendant l'assemblage du couvercle de boîtier (8) sur la bride d'étanchéité (10).

9. Batterie de véhicule (2) d'un véhicule automobile à propulsion ou à entraînement électrique, présentant un boîtier de batterie (4) selon l'une des revendications 1 à 4.
